# FASCICULE DE BREVET EUROPEEN

(11) **EP 3 771 035 B1**
(45) Date de publication et mention de la délivrance du brevet: **02.08.2023**
(21) Numéro de dépôt: 20185160.7
(22) Date de dépôt: 10.07.2020
(51) Int. Cl.: H01Q 1/42, B64D 45/00, B64C 1/38

(54) **CAPOT POUR VÉHICULE, EN PARTICULIER POUR VÉHICULE SUPERSONIQUE OU HYPERSONIQUE**
HAUBE FÜR FAHRZEUG, INSBESONDERE FÜR ÜBERSCHALL- ODER HYPERSCHALLFAHRZEUG
BONNET FOR A VEHICLE, IN PARTICULAR FOR A SUPERSONIC OR HYPERSONIC VEHICLE

(30) Priorité: 26.07.2019 FR 1908398
(43) Date de publication de la demande: 27.01.2021
(73) Titulaire: MBDA France, 92350 Le Plessis-Robinson (FR)
(72) Inventeur: FLAVIN, Edouard, 92350 Le Plessis-Robinson (FR); FONTENAS, Guillaume, 92350 Le Plessis-Robinson (FR); ROSSO, Antoine, 92350 Le Plessis-Robinson (FR)
(74) Mandataire: Gevers & Orès

(56) Documents cités:
- WO-A2-2010/117474
- US-A1- 2007 228 211
- US-A1- 2016 020 512
- US-A1- 2016 031 568
- US-A1- 2018 013 203
- Houda Nadir: "Design of UWB antenna integrating geopolymer dielectric", , 31 mai 2018 (2018-05-31), XP002799037, Extrait de l'Internet: URL:https://www.researchgate.net/publicati on/324909039_Design_of_UWB_Antennas_Integr ating_Geopolymer_Material/link/5aeaacc4a6f dcc03cd90cb7d/download [extrait le 2020-05-15]

## Description

### DOMAINE TECHNIQUE

La présente invention concerne le domaine des véhicules, notamment des engins aéronautiques ou spatiaux croisant à des vitesses supersoniques ou hypersoniques. Plus particulièrement, elle concerne un capot d'antenne structurel et aérodynamique de forme complexe apte à intégrer au moins un radôme d'antenne et capable de résister à de hautes températures. Par ailleurs, ce capot d'antenne est capable de résister à de hautes températures.

### ÉTAT DE LA TECHNIQUE

Lors d'un vol, la surface externe d'un véhicule supersonique ou hypersonique est susceptible d'atteindre des températures de plusieurs centaines de degrés Celsius. En effet, les frottements de l'air sur la surface externe du véhicule entraînent un échauffement important de cette surface externe. En outre, une rupture de la surface externe générée par la présence d'un élément rapporté sur cette surface externe peut créer un pont thermique vers la structure interne du véhicule, des problèmes de jonction, un frein aérodynamique ou encore un point d'arrêt qui devient extrêmement chaud.

La question qui se pose dans ces conditions extrêmement sévères concerne l'intégration des radômes d'antenne et comment limiter les effets indésirables décrits ci-avant. Il convient tout d'abord de disposer de matériaux capables de résister à des températures comprises notamment entre 500°C et 1100°C.

Une solution consiste à réaliser un capot dans un superalliage, tel qu'un « Inconel » ou un métal réfractaire, tel que le molybdène ou un alliage de titane, de zirconium et de molybdène (TZM). Des ouvertures sont alors pratiquées dans le capot en regard des zones pourvues d'une antenne. Des radômes en céramique transparentes et adaptées aux fréquences de fonctionnement des antennes sont alors rapportés et fixés au capot pour fermer chacune de ces ouvertures.

Les superalliages ou les métaux réfractaires permettent au capot de résister à de fortes températures. Toutefois, les superalliages, tels que les « Inconels », présentent des propriétés mécaniques qui s'effondrent à partir de températures supérieures à 700°C ou 800°C. Une protection thermique supplémentaire doit donc être prévue pour accroître la résistance à de hautes températures, ce qui augmente la masse du capot. Par ailleurs, les métaux réfractaires possèdent des conductivités thermiques élevées, ce qui va favoriser les fuites thermiques susceptibles de chauffer la structure interne du véhicule.

Une autre solution permettant au capot de résister à de hautes températures consiste à réaliser le capot en matériau composite céramique dont la matrice est en carbone et/ou en carbure de silicium et dont les fibres sont en carbone et/ou en carbure de silicium. Comme pour la solution précédente, des ouvertures sont pratiquées dans le capot en regard des zones pourvues d'une antenne. Des radômes en céramique transparents aux fréquences de fonctionnement des antennes sont alors fixés au capot.

Le document WO 2010/117474 décrit un radôme comportant une paroi externe en matériau composite céramique.

Un tel matériau composite céramique est capable de résister à des températures largement supérieures aux températures rencontrées lors du fonctionnement du véhicule. Toutefois, la fabrication de pièces de formes complexes et de grandes dimensions est généralement très coûteuse en raison des procédés de mise en oeuvre nécessaires comme le procédé de dépôt chimique en phase vapeur, autrement appelé procédé CVD (CVD pour « Chemical Vapor Déposition » en anglais), et les procédés associés. De plus, les géométries réalisables à partir de ces matériaux sont parfois limitées.

Enfin, pour les deux solutions précitées, l'établissement d'une étanchéité entre le capot et le ou les radômes présente une réelle difficulté en raison de coefficients de dilatation différents entre les matériaux de ces derniers. Les dispositifs de fixation vont de plus générer des ruptures de surface et des points chauds supplémentaires.

### EXPOSÉ DE L'INVENTION

La présente invention a pour objet de pallier ces inconvénients en proposant un capot pour véhicule résistant à des contraintes mécaniques de vol et à de hautes températures sans altérer son étanchéité, ni sa transparence aux fréquences d'utilisation des antennes.

A cet effet, l'invention concerne un capot d'antenne pour véhicule selon l'objet de la revendication 1.

Selon l'invention, le capot est en matériau composite à matrice céramique renforcée par des fibres d'oxyde.

Ainsi, grâce à l'invention, le capot d'antenne résiste à de hautes températures. Il reste en outre transparent aux fréquences d'utilisation des antennes du véhicule. Il ne présente donc pas de problème d'étanchéité car la création d'ouvertures fermées par des radômes fixées sur le capot n'est pas nécessaire.

Selon un premier mode de réalisation, la matrice céramique du matériau composite correspond à une matrice en oxyde, configurée pour être transparente dans une bande de fréquences d'ondes électromagnétiques utilisées par la ou les antennes.

Selon un deuxième mode de réalisation, la matrice céramique du matériau composite correspond à une matrice en géopolymère, configurée pour être transparente dans une bande de fréquences d'ondes électromagnétiques utilisées par la ou les antennes.

En outre, le capot présente une surface externe recouverte d'au moins une première couche métallique sauf sur une ou des parties du capot destinées à venir en regard de la ou des antennes.

De plus, le capot présente une surface interne recouverte d'au moins une deuxième couche métallique sauf sur la ou les parties du capot destinées à venir en regard de la ou des antennes, la deuxième couche métallique étant connectée à la première couche métallique.

Par ailleurs, le capot est agencé pour qu'un espacement existe entre, d'une part, la surface interne du capot et, d'autre part, l'antenne ou chacune des antennes, l'espacement comprenant une lame d'air.

Avantageusement, l'espacement comprend en outre une couche d'isolant thermique recouvrant la surface interne du capot destinée à venir en regard de la ou de chacune des antennes et une couche de matériau composite à matrice céramique renforcée par des fibres d'oxyde recouvrant la couche d'isolant thermique, la lame d'air se situant entre, d'une part, l'antenne ou chacune des antennes et, d'autre part la couche de composite.

En outre, la deuxième couche métallique est configurée pour être connectée à une masse de l'antenne ou de chacune des antennes.

De plus, la première couche métallique est configurée pour être connectée à la masse de l'antenne ou de chacune des antennes par un prolongement à travers le capot.

Selon une particularité, le capot comprend en outre une couche de protection thermique disposée sur la surface interne du capot.

L'invention concerne également un véhicule comportant au moins un capot d'antenne, tel que décrit ci-dessus.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente schématiquement un véhicule équipé du capot,
- la figure 2 représente schématiquement une coupe transversale du capot selon une première variante,
- la figure 3 représente schématiquement une coupe transversale du capot selon une deuxième variante,
- la figure 4 représente schématiquement une coupe transversale du capot selon une troisième variante,
- la figure 5 représente schématiquement une coupe transversale du capot selon une quatrième variante.

### DESCRIPTION DÉTAILLÉE

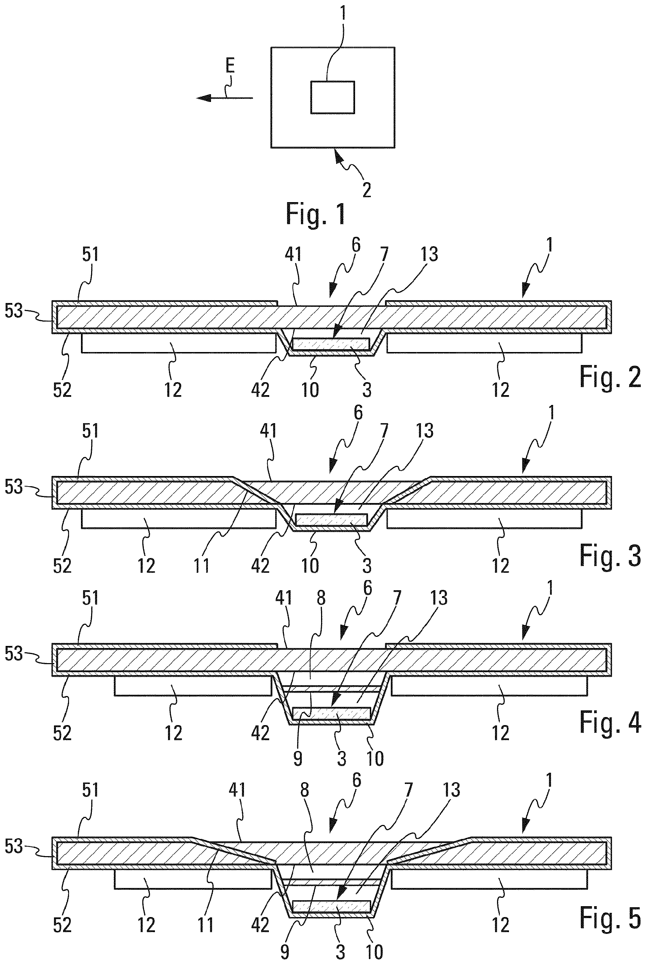

Le capot 1 d'antenne est destiné à être fixé à tout type de véhicule 2 supersonique ou hypersonique, pour couvrir au moins une antenne 3 (figure 1). Le véhicule 2 est pourvu d'une ou de plusieurs antennes 3 qui peuvent servir à émettre des signaux ou à recevoir des signaux. Les signaux émis peuvent être des signaux représentatifs d'informations détectées par des capteurs. Les signaux reçus peuvent être des signaux représentatifs d'ordre de commande du véhicule 2.

De façon non limitative, le véhicule 2 peut correspondre à un missile, un véhicule spatial ou un réservoir.

La figure 1 représente schématiquement un véhicule 2 sur lequel est fixé un capot 1. Le capot 1 peut être fixé à l'avant du véhicule 2 dans le sens de déplacement E du véhicule 2. La figure 2 représente le sens de déplacement E du véhicule 2 par une flèche. La pointe de la flèche est dirigée dans le sens de l'avant du véhicule 2. Le capot 1 peut également être fixé à une autre portion du véhicule 2 ou former toute la couverture du véhicule 2.

Le capot 1 recouvre ainsi tout ou partie du véhicule 2 supersonique ou hypersonique en assurant une jonction mécanique et aérodynamique.

Le capot 1 est fabriqué en matériau composite à matrice céramique renforcée par des fibres d'oxyde.

Les matériaux composites à matrice céramique, notamment à matrice en oxyde ou en géopolymère, sont particulièrement adaptés pour résister jusqu'à des températures comprises dans une plage allant de 500°C à 1100°C. Par ailleurs, ils possèdent la particularité d'être électriquement isolants et transparents dans la bande de fréquences des ondes électromagnétiques utilisées par l'antenne ou les antennes 3 pour porter les signaux reçus et émis. Cela évite donc de pratiquer des ouvertures en regard de la ou des antennes 3, ce qui évite des ruptures de surface générées par la présence d'éléments rapportés, tels que des radômes. Ainsi, la forme aérodynamique du capot 1 n'est pas dégradée par des ruptures de surface. Le ou les radômes sont ainsi directement intégrés dans le capot 1.

Par ailleurs, le fait ne de pas avoir à fixer des radômes au niveau d'ouvertures pratiquées dans le capot 1 évite des problématiques de pont thermique ainsi que des problématiques de dilatation, de jointure et de fixation entre matériaux différents du capot 1 et des radômes. En formant toute la couverture du véhicule 2, on évite toute zone de fixation entre différents éléments destinés à former un capot. Le capot 1 formant toute la couverture du véhicule 2 remplit alors la fonction mécanique de l'ensemble du capotage ainsi que la fonction de transparence aux ondes électromagnétiques d'un radôme.

De plus, la masse d'un tel capot 1 est plus faible que s'il avait été fabriqué en métal. En effet, la densité d'un tel matériau composite à matrice céramique est de l'ordre de 2,5 alors que celle d'un métal est de l'ordre de 8 à 10. En outre, le coût de fabrication est moindre que s'il avait été fabriqué en matériau composite usuellement utilisé tel qu'un matériau composite en matrice céramique de carbone renforcée par des fibres en carbure de silicium.

Par exemple et de façon non limitative, les fibres d'oxyde correspondent à des fibres d'oxyde d'aluminium (Al₂O₃), des fibres d'oxyde de zirconium (ZrO₂), des fibres d'oxyde de silicium (SiO₂), un mélange de fibres d'oxyde tel que des fibres de mullite.

Selon un premier mode de réalisation, la matrice céramique correspond à une matrice en oxyde, configurée pour être transparente dans une bande de fréquences d'ondes électromagnétiques utilisées par l'antenne 3 ou les antennes 3.

Par exemple et de façon non limitative, la matrice en oxyde peut être de même nature que les fibres citées ci-dessus. Par exemple, la matrice en oxyde correspond à une matrice en oxyde d'aluminium, une matrice en oxyde de zirconium ou une matrice en oxyde de silicium.

Selon un deuxième mode de réalisation, la matrice céramique correspond à une matrice en géopolymère, configurée pour être transparente dans une bande de fréquences d'ondes électromagnétiques utilisées par l'antenne 3 ou les antennes 3.

Par exemple et de façon non limitative, le géopolymère correspond à un ou des phosphates d'aluminium, à un ou des silicates ou à un ou des aluminosilicates.

De façon non limitative, le capot 1 peut présenter une épaisseur comprise entre 0,75 mm et 4 mm.

Avantageusement, le capot 1 présente une surface externe 41 recouverte d'au moins une couche métallique 51 sauf (ou excepté) sur une ou des parties 6 du capot 1 destinées à venir en regard de la ou des antennes 3 (figures 2, 3, 4 et 5).

Par exemple et de façon non limitative, la couche métallique 51 peut être en nickel, en argent, en cuivre et/ou toute autre couche permettant de créer une opacité dans une bande de fréquences d'ondes radar (conduisant à un comportement métallique de la structure du véhicule 1).

Cette couche métallique 51 permet d'assurer un écoulement des charges électriques sur la surface du capot 1. Elle peut également permettre d'assurer un blindage électromagnétique et/ou une certaine furtivité du véhicule 2. La ou les parties 6 non recouvertes permettent le passage des signaux susceptibles d'être émis ou reçus par la ou les antennes 3 du véhicule 2.

Le capot 1 peut également présenter une surface interne 42 recouverte d'au moins une couche métallique 52 sauf sur la ou les parties 6 du capot 1 destinées à venir en regard de la ou des antennes 3. La couche métallique 52 est connectée à la couche métallique 51. Par exemple la couche métallique 51 et la couche métallique 52 sont reliées ensemble par une couche métallique 53 recouvrant une tranche du capot 1 entre la surface externe 41 et la surface interne 42. Cette couche métallique 53 permet d'établir une connexion électrique entre les deux couches métalliques 51 et 52.

Les couches métalliques 51 et 52 présentent une épaisseur suffisamment réduite pour ne pas créer de ruptures de surface.

De façon non limitative, la couche métallique 51 et la couche métallique 52 présentent une épaisseur comprise dans une plage allant de 0,01 mm à 1 mm.

La ou les parties 6 non recouvertes par les couches métalliques 51 et 52 jouent ainsi le rôle de radôme de la ou des antennes 3 destinées à venir en regard de cette partie ou de ces parties 6. L'architecture ou l'épaisseur de la ou des parties 6 est adaptée pour assurer un maximum de transparence dans une bande de fréquences des ondes électromagnétiques utilisées par la ou les antennes 3.

Selon une variante de réalisation (figures 2 et 3), le capot 1 est agencé pour qu'un espacement 7 existe entre, d'une part, la surface interne 42 du capot 1 et, d'autre part, l'antenne 3 ou chacune des antennes 3 dans une position montée du capot 1. L'expression « position montée du capot 1 » signifie que le capot 1 est monté sur le véhicule 2. De façon avantageuse, l'espacement 7 comprend à une lame d'air 13. L'épaisseur de la lame d'air 13 est adaptée pour limiter l'échauffement de la ou des antennes 3 destinées à venir en regard des parties 3 non recouvertes par la ou les couches métalliques 51 et 52.

Par exemple et de façon non limitative, la lame d'air 13 présente une épaisseur comprise entre 1 mm et 5 mm. L'épaisseur de la lame d'air peut être limitée pour favoriser son intégration.

Selon une autre variante de réalisation (figures 4 et 5), l'espacement 7 peut comprendre en outre une couche d'isolant thermique 8 recouvrant la surface interne 42 du capot 1 destinée à venir en regard de la ou de chacune des antennes 3 et une couche 9 de matériau composite à matrice céramique renforcée par des fibres d'oxyde recouvrant la couche d'isolant thermique 8. La lame d'air 13 se situe ainsi entre, d'une part, l'antenne 3 ou chacune des antennes 3 et, d'autre part la couche 9 de matériau composite.

La couche d'isolant thermique 8 présente une épaisseur résultant d'un compromis entre le niveau de transparence sur la bande de fréquences de fonctionnement de la ou des antennes 3 et les capacités d'isolation de l'isolant. Par exemple et de façon non limitative, la couche d'isolant thermique 8 présente une épaisseur comprise entre 1 mm et 10 mm.

De préférence, la couche métallique 52 est configurée pour être connectée (électriquement) à une masse 10 de l'antenne 3 ou de chacune des antennes 3 (figures 2 et 4). Cette connexion permet l'évacuation des charges électriques qui sont susceptibles de se former sur la surface interne 42 du capot 1.

De même, la couche métallique 51 est configurée pour être connectée (électriquement) à la masse 10 de l'antenne 3 ou de chacune des antennes 3 par un prolongement 11 à travers le capot 1 (figures 3 et 5). Cette connexion permet également l'évacuation des charges électriques qui sont susceptibles de se former sur la surface externe 41 du capot 1.

Le capot 1 peut comprendre en outre une couche de protection thermique 12 disposée sur la surface interne 42 du capot 1. La couche de protection thermique 12 peut recouvrir la couche métallique 52.

La couche de protection thermique 12 présente une épaisseur calculée pour répondre à une spécification de température interne. Par exemple et de façon non limitative, la couche de protection thermique 12 présente une épaisseur comprise entre 2 mm et 10 mm.

## Revendications

1. Capot d'antenne pour véhicule (2), le capot (1) étant destiné à couvrir au moins une antenne (3) fixée sur le véhicule (2), le capot (1) étant en matériau composite à matrice céramique renforcée par des fibres d'oxyde, le capot (1) présentant une surface externe (41) recouverte d'au moins une première couche métallique (51) sauf sur une ou des parties (6) du capot (1) destinées à venir en regard de la ou des antennes (3), **caractérisé en ce que** le capot (1) présent une surface interne (42) recouverte d'au moins une deuxième couche métallique (52) sauf sur la ou les parties (6) du capot (1) destinées à venir en regard de la ou des antennes (3), la deuxième couche métallique (52) étant connectée à la première couche métallique (51) par une couche métallique (53) recouvrant une tranche du capot (1) entre la surface externe (41) et la surface interne (42).

2. Capot selon la revendication 1,
**caractérisé en ce que** la matrice céramique du matériau composite correspond à une matrice en oxyde, configurée pour être transparente dans une bande de fréquences d'ondes électromagnétiques utilisées par la ou les antennes (3).

3. Capot selon la revendication 1,
**caractérisé en ce que** la matrice céramique du matériau composite correspond à une matrice en géopolymère, configurée pour être transparente dans une bande de fréquences d'ondes électromagnétiques utilisées par la ou les antennes (3).

4. Capot selon l'une quelconque des revendications 1 à 3,
**caractérisé en ce que** le capot (1) est agencé pour qu'un espacement (7) existe entre, d'une part, la surface interne (42) du capot (1) et, d'autre part, l'antenne (3) ou chacune des antennes (3) dans une position montée du capot (1), l'espacement (7) comprenant une lame d'air (13).

5. Capot selon la revendication 4,
**caractérisé en ce que** l'espacement (7) comprend en outre une couche d'isolant thermique (8) recouvrant la surface interne (42) du capot (1) destinée à venir en regard de la ou de chacune des antennes (3) et une couche (9) de matériau composite à matrice céramique renforcée par des fibres d'oxyde recouvrant la couche d'isolant thermique (8), la lame d'air (13) se situant entre, d'une part, l'antenne (3) ou chacune des antennes (3) et, d'autre part la couche (9) de matériau composite.

6. Capot selon l'une quelconque des revendications 1 à 5,
**caractérisé en ce que** la deuxième couche métallique (52) est configurée pour être connectée à une masse (10) de l'antenne (3) ou de chacune des antennes (3).

7. Capot selon l'une quelconque des revendications 1 à 6,
**caractérisé en ce que** la première couche métallique (51) est configurée pour être connectée à la masse (10) de l'antenne (3) ou de chacune des antennes (3) par un prolongement (11) à travers le capot (1).

8. Capot selon l'une quelconque des revendications 1 à 7,
**caractérisé en ce qu'**il comprend en outre une couche de protection thermique (12) disposée sur la surface interne (42) du capot (1).

9. Véhicule,
**caractérisé en ce qu'**il comprend au moins un capot (1) tel que spécifié selon l'une quelconque des revendications 1 à 8.

## Patentansprüche

1. Antennenabdeckung für ein Fahrzeug (2), wobei die Abdeckung (1) dazu bestimmt ist, mindestens eine am Fahrzeug (2) befestigte Antenne (3) abzudecken, wobei die Abdeckung (1) aus einem Verbundmaterial mit durch Oxidfasern verstärkter Keramikmatrix besteht, wobei die Abdeckung (1) eine Außenfläche (41) aufweist, die mit mindestens einer ersten Metallschicht (51) bedeckt ist, außer auf einem oder mehreren Teilen (6) der Abdeckung (1), die dazu bestimmt sind, der oder den Antennen (3) gegenüber zu liegen, **dadurch gekennzeichnet, dass** die Abdeckung (1) eine Innenfläche (42) aufweist, die mit mindestens einer zweiten Metallschicht (52) bedeckt ist, außer auf dem Teil oder den Teilen (6) der Abdeckung (1), die dazu bestimmt sind, der oder den Antennen (3) gegenüber zu liegen, wobei die zweite Metallschicht (52) mit der ersten Metallschicht (51) durch eine Metallschicht (53) verbunden ist, die einen Abschnitt der Abdeckung (1) zwischen der Außenfläche (41) und der Innenfläche (42) bedeckt.

2. Abdeckung nach Anspruch 1,
**dadurch gekennzeichnet, dass** die Keramikmatrix des Verbundmaterials einer Oxidmatrix entspricht, die so konfiguriert ist, dass sie in einem Frequenzband von elektromagnetischen Wellen, die von der oder den Antennen (3) verwendet werden, transparent ist.

3. Abdeckung nach Anspruch 1,
**dadurch gekennzeichnet, dass** die Keramikmatrix des Verbundmaterials einer Geopolymermatrix entspricht, die so konfiguriert ist, dass sie in einem Frequenzband von elektromagnetischen Wellen, die von der oder den Antennen (3) verwendet werden, transparent ist.

4. Abdeckung nach einem der Ansprüche 1 bis 3,
**dadurch gekennzeichnet, dass** die Abdeckung (1) so angeordnet ist, dass in einer montierten Position der Abdeckung (1) ein Zwischenraum (7) zwischen der Innenfläche (42) der Abdeckung (1) einerseits und der Antenne (3) oder jeder der Antennen (3) andererseits besteht, wobei der Zwischenraum (7) einen Luftspalt (13) umfasst.

5. Abdeckung nach Anspruch 4,
**dadurch gekennzeichnet, dass** der Zwischenraum (7) weiter eine wärmeisolierende Schicht (8), die die Innenfläche (42) der Abdeckung (1) bedeckt, welche dazu bestimmt ist, der oder jeder der Antennen (3) gegenüber zu liegen, und eine Schicht (9) aus Verbundmaterial mit durch Oxidfasern verstärkter Keramikmatrix, die die wärmeisolierende Schicht (8) bedeckt, umfasst, wobei sich der Luftspalt (13) zwischen der Antenne (3) oder jeder der Antennen (3) einerseits und der Schicht (9) aus Verbundmaterial andererseits befindet.

6. Abdeckung nach einem der Ansprüche 1 bis 5,
**dadurch gekennzeichnet, dass** die zweite Metallschicht (52) so konfiguriert ist, dass sie mit einer Masse (10) der Antenne (3) oder jeder der Antennen (3) verbunden werden kann.

7. Abdeckung nach einem der Ansprüche 1 bis 6,
**dadurch gekennzeichnet, dass** die erste Metallschicht (51) so konfiguriert ist, dass sie über eine Verlängerung (11) durch die Abdeckung (1) mit der Masse (10) der Antenne (3) oder jeder der Antennen (3) verbunden werden kann.

8. Abdeckung nach einem der Ansprüche 1 bis 7,
**dadurch gekennzeichnet, dass** sie weiter eine Wärmeschutzschicht (12) umfasst, die auf der Innenfläche (42) der Abdeckung (1) angeordnet ist.

9. Fahrzeug,
**dadurch gekennzeichnet, dass** es mindestens eine Abdeckung (1) umfasst, wie sie nach einem der Ansprüche 1 bis 8 spezifiziert ist.

## Claims

1. An antenna cover for a vehicle (2), the cover (1) being intended to cover at least one antenna (3) attached to the vehicle (2),the cover (1) being made of composite material with a ceramic matrix reinforced by oxide fibres, the cover (1) having an external surface (41) covered with at least one first metal layer (51) except on one or more portions (6) of the cover (1) intended to come facing the antenna or the antennas (3),
**characterised in that** the cover (1) has an internal surface (42) covered by at least one second metal layer (52) except on the portion or the portions (6) of the cover (1) intended to come facing the antenna or the antennas (3), the second metal layer (52) being connected to the first metal layer (51) by a metal layer (53) covering a slice of the cover (1) between the external surface (41) and the internal surface (42).

2. The cover according to claim 1,
**characterised in that** the ceramic matrix of the composite material corresponds to an oxide matrix, configured to be transparent in a frequency band of electromagnetic waves used by the antenna or the antennas (3).

3. The cover according to claim 1,
**characterised in that** the ceramic matrix of the composite material corresponds to a geopolymer matrix, configured to be transparent in a frequency band of electromagnetic waves used by the antenna or the antennas (3).

4. The cover according to any one of claims 1 to 3,
**characterised in that** the cover (1) is arranged so that a spacing (7) exists between, on the one hand, the internal surface (42) of the cover (1) and, on the other hand, the antenna (3) or each of the antennas (3) in a mounted position of the cover (1), the spacing (7) comprising an air plate (13).

5. The cover according to claim 4,
**characterised in that** the spacing (7) further comprises a layer of thermal insulation (8) covering the internal surface (42) of the cover (1) intended to come facing the antenna or each of the antennas (3) and a layer (9) of composite material with a ceramic matrix reinforced by oxide fibres covering the layer of thermal insulation (8), the air plate (13) being located between, on the one hand, the antenna (3) or each of the antennas (3) and, on the other hand, the layer (9) of composite material.

6. The cover according to any one of claims 1 to 5,
**characterised in that** the second metal layer (52) is configured to be connected to a ground (10) of the antenna (3) or each of the antennas (3).

7. The cover according to any one of claims 1 to 6,
**characterised in that** the first metal layer (51) is configured to be connected to the ground (10) of the antenna (3) or each of the antennas (3) by an extension (11) through the cover (1).

8. The cover according to any one of claims 1 to 7,
**characterised in that** it further comprises a thermal protection layer (12) arranged on the internal surface (42) of the cover (1).

9. A vehicle,
**characterised in that** it comprises at least one cover (1) as specified according to any one of claims 1 to 8.
